# EUROPEAN PATENT SPECIFICATION

(11) **EP 1 819 232 B1**
(45) Date of publication and mention of the grant of the patent: **27.07.2011**
(21) Application number: 05789121.0
(22) Date of filing: 28.09.2005
(51) Int. Cl.: A21D 8/04, A21D 15/00, A21D 15/04, A21D 17/00

(54) **DOUGH FOR RYE BREAD OF EXTENDED SHELF LIFE, METHOD OF MAKING RYE BREAD OF EXTENDED SHELF LIFE AND METHOD OF REFRESHING SUCH BREAD**
ROGGENBROTTEIG, VERFAHREN ZUR HERSTELLUNG VON ROGGENBROT MIT VERLÄNGERTER LAGERBESTÄNDIGKEIT UND VERFAHREN ZUR AUFFRISCHUNG DES BESAGTEN BROTES
PATE POUR PAIN DE SEIGLE LONGUE CONSERVATION ET PROCEDES DE FABRICATION ET DE RAFRAICHISSEMENT DE CE PAIN

(30) Priority: 15.10.2004 PL 37072404
(43) Date of publication of application: 22.08.2007
(73) Proprietor: Kalamarz, Stanislaw, 37-200 Przeworsk (PL); Kalamarz, Arkadiusz, 37-200 Przeworsk (PL)
(72) Inventor: Kalamarz, Stanislaw, 37-200 Przeworsk (PL); Kalamarz, Arkadiusz, 37-200 Przeworsk (PL)
(74) Representative: Warzybok, Tadeusz
(86) International application number: PCT/PL2005/000063
(87) International publication number: WO 2006/041324

(56) References cited:
- EP-A- 0 298 605
- EP-A- 0 554 536
- WO-A-94/00019
- WO-A-94/06301
- DE-A1- 2 434 261
- DE-A1- 3 338 977
- DE-U1-202005 007 090
- GB-A- 1 538 428
- LV-B- 12 221
- US-A- 3 630 761

## Description

The object of this invention is the dough for rye bread of extended shelf life, method of making rye bread of extended shelf life and method of refreshing such bread.

The method of making bread of extended shelf life is known from Polish patent application P-339817 wherein the ingredients in form of natural rye sour, wholemeal flour, rye and/or wheat bran, graham wheat flour, water, salt and yeast starter or a known white dough, to which roasted buckwheat groats, suitably prepared, are added in a quantity of up to four parts by weight, depending on the dough quantity.

Polish patent specification for invention No. 187326 reveals also a wholemeal bread and the method of making it, containing rye flour, additions of wheat flour, yeast, kitchen salt and caramel, as well as prunes in a quantity of 25% of the total dough weight before baking. The method of making the bread with the use of above mentioned ingredients consists in using natural sours with a five-step fermentation method and adding destoned prunes in the last stage of dough making. Then the dough is formed to portions and left for a secondary dough growth. Then it is baked at 240 °C.

In turn, a ready-to-use bakery leaven is revealed in the Polish application for invention No. P-332534. It contains at least one kind of non-malt cereal flour, one kind of amylase-supplying malt cereal flour and water, an inoculant in form of a preparation of hetero-fermentation lactic bacteria and yeast and is characterized by the content of dry matter from 12 to 50 % by weight, preferably 13 to 20 % by weight, with the pH value of the leaven between 4 and 4.3.

Polish patent specification for invention No. 151099 reveals also a method of making dough for wholemeal bread wherein grains of bread cereals are soaked in water, in a ratio 60-70 kg of water at 28-46 °C to 100 kg of grains, then the water is drained off, the grain is kneaded and then the yeast is diluted in water drained from grain soaking with kefir and buttermilk additions and left at the temperature of 32°C for 20 minutes to achieve their maximum activity. Soaked and kneaded grain is joined with yeast, activated with grain-soaking water, and with the rest of that water while introducing improving ingredients, as powdered herbs, fruit additions, vegetable oil, or seeds of oil-bearing plants, during kneading. Correct dough consistency and elasticity is reached in the kneading process by adding mineral water, kefir or buttermilk as well as wheat or rye flour. So prepared dough is put into metal moulds (tins) and put away for 40-60 minutes at 32°C to finish the fermentation and maturing processes. Wholemeal bread baking starts at initial temperature of 220°C and finishes at the temperature of 170°C after 45-50 minutes.

The method of preparing bakery products containing viable microorganisms known from patent specification WO 94/00019A1, comprises the following steps:
- preparing a baked product and cooling it to a temperature in the range of 0 to 70°C,
- preparing a suspension of microorganisms, containing 10⁷ to 10¹² viable organisms per ml,
- injecting into the baked product of a volume of the suspension of microorganisms which is in the range of 2 to 20 ml per kg of product.

This method describes also the dietary fibre-enriched rye bread prepared from a dough containing the following ingredients: leaven (water, whole-meal flour of rye and leaven culture), water, whole-meal flour of rye, whole rye grains, dried crumbs of rye bread, salt, dried leaven (wheat flour, wheat bran, water, leaven culture), wheat starch, yeast, malt extract and syrup. The dough was formed into loaves of 1600g, baked and cooled to temperature less than 70°C.

The European patent EP 0298605A1 describes bread dough mixed from the following ingredients: 1260g sour dough (prepared from 500g of rye flour, 200g of dry powdered Lactibacilli started and 560g of water), 700 g rye flour, 600 g of wheat flour, 30g pressed yeast, 40 g salt, 780 g water. It describes also the improved process of bread baking using the sourdough method according to this invention wherein, for each batch of baked bread, the subsequent batches of fermented dough are freshly prepared through inoculation with bacteria composition on an inert carrier.

The European patent EP 0554536A1 describes the preparation of rye bread from dough comprising sourdough, rye flour, wheat flour, fat, yeast, salt and water.

In the Lithuanian patent LV12221B, the typical bread recipe contains also potato flakes, whereas the patent, DE 3338977A1, describes a combination of ingredients of rye and wheat bread contains rye flour of type 1150, wheat flour type 1050, yeast, salt, water, whereas the subject matter of the invention itself is the method of improving the quality of bread prepared from rapidly ripening biological sourdough by adding nutritive and active substances consisting of amino acids and vitamins.

The USA patent nr 3630761 describes food freshener and/or warming device containing a closed vessel with partition means dividing the interior thereof into two chambers, means for continuously recirculating steam through the first chamber of the vessel, passage means having an inlet in said first chamber and an outlet in said second chamber, valve means for controlling the flow of steam through said passage means as well as aperture means for applying steam from said second chamber directly to a food item. Food warming or refreshing in this device is achieved by using heat and dry steam.

The German patent DE2434261A1 describes a process of refreshing bread by exposing it to microwave radiation at a frequency of 2450Hz with power dissipation of 600 Watt for 2-4 minutes, whereas, advantageously, the bread is enclosed in plastic foil packing.

The purpose of the invention is to develop a recipe and process for making rye bread of extended shelf life to eighteen-month period, while it still retains the required organoleptic and physicochemical properties, including its moisture content of 46-53%, acidity pH=6-8, as well as adequate taste and flavour/odor.

Dough for rye bread of extended shelf life of this invention contains in its formula: sourdough, with the degree of its total acidity of 20.0-35.0 conventional units, in a quantity of 0.194-0.262 parts by weight, rye flour, grade 720, in a quantity of 0.361-0.277 parts by weight, wheat flour, grade 750, in a quantity of 0.090-0.092 parts by weight, yeast in a quantity of 0.012-0.010 parts by weight, malt extract in a quantity of 0.022-0.027 parts by weight, potato flakes in a quantity of 0.015-0.018 parts by weight, fat in a quantity of 0.015-0.018 parts by weight, kitchen salt in a quantity of 0.012-0.010 parts by weight, improving agent in a quantity of 0.008-0.009 parts by weight and water in a quantity of 0.271-0.277 parts by weight.

The recipe for the sourdough contains a mixture consisting of: rye flour, grade 2000, in a quantity of 0.014-0.016 parts by weight, water in a quantity of 0.030-0.033 parts by weight, kitchen salt in a quantity of 0.008-0.006 parts by weight and lactic bacteria in a quantity of 0.00002-0.00004 parts by weight, as well as rye flour, glade 2000, in a quantity of 0.240-0.250 parts by weight, rye flour, grade 720, in a quantity of 0.240-0.250 parts by weight and water in a quantity of 0.476-0.451 parts by weight. It is also advantageous when the sourdough contains in its formulation a mixture consisting of: rye flour, grade 2000, in a quantity of 0.014-0.016 parts by weight, water in a quantity of 0.030-0.033 parts by weight, kitchen salt in a quantity of 0.008-0.006 parts by weight and lactic bacteria in a quantity of 0.00002-0.00004 parts by weight, as well as rye flour, grade 2000, in a quantity of 0.128-0.122 parts by weight, rye flour, grade 720, in a quantity of 0.128-0.122 parts by weight, crumbled wholemeal rye bread in a quantity of 0.250-0.244 parts by weight and water in a quantity of 0.450-0.462 parts by weight.

The method of making rye bread of extended shelf life of this invention consists in the following: Pouring 0.194-0.262 parts by weight of sourdough, with the degree of its total acidity of 20-35 conventional units, and 0.054-0.055 parts by weight of the water to be used for the dough into a kneading trough and mixing that while adding 0.012-0.010 parts by weight of yeast, 0.010-0.012 parts by weight of kitchen salt diluted in water, 0.015-0.018 parts by weight of potato flakes previously soaked in 0.135-0.107 parts by weight of water at 40°C, 0.022-0.027 parts by weight of malt extract diluted in 0.045-0.043 parts by weight of water at 40°C, as well as adding 0.015-0.018 parts by weight of fat, preferably lard, at the end of mixing these ingredients. Adding 0.361-0.277 parts by weight of rye flour, grade 720, to the resulting mixture, depending on the total acidity of the sourdough used, as well as 0.090-0.092 parts by weight of wheat flour, grade 750, and 0.035-0.037 parts by weight of water. Then all is subjected to slow-speed blending for 8-10 minutes and the resulting dough is left at rest for 4-6 minutes and, at the temperature of 24-26°C the mature dough is divided to portions and put into metal moulds (tins) and the moulds, filled with dough, are put for 65 minutes into warm oven at the temperature of 44-46°C and humidity of 78-82 % for the dough to rise. Then it is baked in a preferably ceramic, baking furnace at 210-270°C for 25-45 minutes. Once baked, moulds with bread are removed from the furnace and the bread is put onto a spongy mat, then it is moved to sterile room or compartment where the bread is wrapped into polypropylene foil and sealed on the foil sides. Then bread is put into a hermetic furnace at 104-106°C and pasteurized thermally until temperature within the bread goes down to 92°C. Once thermally stabilized, the bread is packed into another double layer foil, preferably polyamide-polyethylene grade, and sides are sealed with a subsequent check for packing tightness.

Favourably, the packing tightness check is performed in an apparatus equipped with tight water chamber, in which the bread is placed and vacuum is created to enable detection of even small air bubbles.

The method of refreshing rye bread of extended shelf life of this invention wherein the bread, packed tightly in double, preferably polypropylene and polyamide-polyethylene foil, is placed in the chamber of the apparatus at 90-100°C and left in it until warmed all through, then the bread is cooled in free air, removed from packing foil and left to acclimatize for 20 minutes, then it is subject to slicing, whereas the process of bread warming is conducted:
- in an open kettle with water at temperature of 90°C for 30 minutes, or
- in perforated container in chamber of convection-steam oven preheated to a temperature of 100°C and humidity of 100% for 30 minutes, or
- in microwave oven at temperature of 100°C for 3 minutes.

The subject of the invention is explained in detail in the examples of its embodiments, which do not limit its scope.

Wholemeal rye bread of extended shelf life contains in its formula: a sourdough containing lactic bacteria, rye flour, salt and water, as well as rye flour of grade 720, wheat flour of grade 750, yeast, malt extract, potato flakes, salt, animal fat, improving agent and water, whereas the detailed qualitative and quantitative composition of that bread is presented in the examples I-VII shown in Table 1, while the detailed qualitative and quantitative composition of the sourdough, which is onc of the basic ingredients of this bread is presented in the examples VIII-XI shown in Table 2.

In turn, the method of making rye bread of extended shelf life based on its formulations as mentioned in the examples of its embodiments I-XI consists in being realized in three mutually independent stages consisting in making sourdough of required total acidity, making the wholemeal bread based on that sourdough and refreshing this bread within the 18-month storage period, whereas this method is explained closer in the subsequent examples of its embodiment.

**Table 1**

| **Formulation of rye bread of extended shelf life** | | | | | | | | | | | | | | | | |
|---|---|---|---|---|---|---|---|---|---|---|---|---|---|---|---|---|
| Examples of patent embodi-ments | Sourdough of the degree total acidity in conventional units [kg] | | | | | | Rye flour, grade 720 [kg] | Wheat flour grade 750 [kg] | Yeast [kg] | Malt extract 75.65 % [kg] | Potato flakes [kg] | Animal fat (lard) [kg] | Salt [kg] | Impro-ving agent [kg] | [*l*] | water Emulsion for mould greasing [*l*] |
| | 20- 25.8 | 26-27 | 27-29 | 29-31 | 31-33 | 33-35 | | | | | | | | | | |
| I | - | 40.0 | - | - | - | - | 75 | 20 | 2.7 | 5.0 | 3.5 | 3.5 | 2.7 | 2.0 | 60 | 1.2 |
| II | - | - | 68.25 | - | - | - | 80 | 25 | 3.0 | 7.0 | 4.7 | 4.5 | 3.0 | 2.4 | 80 | 1.5 |
| III | - | - | - | 65.0 | - | - | 80 | 25 | 3.0 | 7.0 | 4.7 | 4.7 | 3.0 | 2.4 | 80 | 1.5 |
| IV | - | - | - | - | 63.0 | - | 83 | 23 | 3.0 | 7.0 | 4.7 | 4.7 | 3.2 | 2.4 | 80 | 1.5 |
| V | - | - | - | - | - | 59 | 90 | 20 | 3.5 | 9.0 | 6.0 | 6.0 | 3.5 | 3.0 | 85 | 1.7 |
| VI | - | 73.5 | - | - | - | - | 75 | 27 | 3.3 | 7.4 | 4.8 | 5.2 | 3.3 | 2.7 | 82 | 1.6 |
| VII | 84.0 | | - | - | - | - | 80 | 30 | 3.5 | 7.8 | 4.8 | 5.2 | 3.3 | 2.7 | 90 | 1.6 |

**Table 2**

| **Formulation of sourdough of the degree total acidity of 20.0-35.0 conventional units** | | | | | | | | |
|---|---|---|---|---|---|---|---|---|
| Examples of patent embodiments | Starter of the formulation | | | | Rye flour, grade 720 [kg] | Rye flour of grade 2000 | Whole-meal rye bread [kg][kg] | Water [*l*] |
| | Rye flour of grade 2000 [kg] | Water [*l*] | Kitchen salt [kg] | Lactic bacteria [kg] | | | | |
| VIII | 9.0 | 16.0 | 0.38 | 0.010 | 120.0 | 120.0 | - | 240 |
| IX | 9.0 | 18.0 | 0.38 | 0.020 | 70.0 | 70.0 | 140.0 | 280 |
| X | 8.0 | 18.0 | 0.35 | 0.020 | 90.0 | 90.0 | 180.0 | 310 |
| XI | 12.0 | 25.0 | 0.48 | 0.030 | 188.0 | 188.0 | - | 340 |

### Example XII

Eighteen litres of water, warmed to 40°C, and 9 kg of rye flour, grade 2000, 0.38 kg of kitchen salt and 0.020 kg of lactic bacteria were added to the first sourdough maker vessel and, upon mixing them, the mixture was left in a closed vessel for 24 hours, then the mixture thus obtained was poured over to another vessel of the sourdough maker, then 250 litres of water at 45°C, 140 kg of rye flour, grade 2000, and 140 kg of rye flour, grade 720, were added, then everything was blended together and left resting for 24 hours. After that time, the mixture of approx. 540 litres in volume was transferred to the next vessel and put into air-conditioned room at temperature not exceeding 16°C for another 24 hours. The sourdough thus obtained was subjected to acidity test. Its total acidity was 25 conventional units.

### Example XIII

The process of sourdough making was conducted in identical manner as in the example XII; except that the other vessel of the borsch maker was filled with 280 litres of water at 45°C, 75 kg of rye flour of grade 2000, 75 kg of rye flour of grade 720, and 150 kg of crumbled wholemeal bread. The sourdough thus obtained had its total acidity of 31 conventional units.

### Example XIV

The process of sourdough making was conducted in identical manner as in the example XII with the formulation as specified in the example X. The sourdough thus obtained had its total acidity of 35 conventional units.

### Example XV

The process of sourdough making was conducted in identical manner as in the example XII with the formulation as specified in the example XI. The sourdough thus obtained had its total acidity of 20 conventional units.

### Wholemeal rye bread making stage

### Example XVI

Seventy litres of sourdough with its total acidity of 26.5 conventional units and 15 litres of water were poured into a kneading trough and mixed while adding 3 kg of yeast and kitchen salt in form of their water solution, as well as 4.5 kg of potato flakes previously soaked in 32 litres of water at 40°C, 4 kg of 75.65% malt extract diluted in 12 litres of water at 50°C and, at the end of ingredient mixing, 4 kg of liquefied lard was also added. Then, 75 kg of rye flour of grade 720 and 15 kg of wheat flour of grade 750, as well as 10 litres of water were added to the resulting mixture. Then, all was subjected to slow-speed blending for 9 minutes with differing r.p.m. and, once thoroughly mixed, the resulting dough was left at rest for 5 minutes. When at 25°C, the mature dough was then divided into portions of mass 8% bigger than that of a ready bread loaf, which are put into pre-greased metal moulds (tins). Then the moulds, filled with dough, were put for about 65 minutes into warm oven at the temperature of 45°C and humidity of 80 % for the dough to rise. Then the dough was baked in ceramic baking furnace at 250°C for 30 minutes. After that time moulds with bread were removed from furnace and put onto a spongy mat, then moved in baskets to sterile room or compartment, where still warm bread was wrapped into polypropylene foil and scaled with the use of the 'flow-pack' machine equipped with stealing jaws of suitable sealing width. So packed bread is then put onto sheet metal pads about 3-cm apart of each other and onto trolleys, with which it went into a hermetic furnace at 105°C and was pasteurized thermally until the temperature inside the bread reached 92°C. Once 5 thermally stabilized, the bread was packed into another double-layer polyamide-polyethylene foil using the same 'flow-pack' machine and subsequently subjected to check for packing tightness in a tester with tight water chamber and a suitable vacuum was created, so as to enable detection of small air bubbles, and thus even microscopic faults of bread packing sealing. Random samples for laboratory testing were taken from the batch of bread with positively passed tightness test. The test consisted of sensory and physicochemical assessments. The former consisted of visual assessment, as well as check of bread weight, taste and favour and the latter comprised the check of bread crumb moisture and acidity, which were 46-53% and pH=6-8, respectively. Subsequently, five hours after bread removing from the oven and its complete cooling down and after the laboratory checks, the bread was packed into transportation cartons, 12 loaves per water-resistant carton of corrugated board, and stored in warehouses in stack not higher than 8 tiers.

### Bread refreshing stage

### Example XVII

After nine and eighteen months of bread storage in the manner described above, it was subjected to refreshing with the use of a water method, as well as methods using a convection-and-steam oven and that using a microwave oven.

The water method of bread refreshing consisted in placing the three-layer foil wrapped bread in an open kettle with water at the temperature of 90°C for 30 minutes, removing it from water and leaving it in open air to cool down. Then it is removed from double foil packing, left to acclimatize for 20 minutes and then sliced.

Convection-steam furnace method of bread refreshing consisted in placing the three-layer foil wrapped bread in a perforated container, and placing the container in the oven preheated to the temperature of 100°C. It remained at that temperature and oven chamber humidity of 100% for 30 minutes. After removing from the oven chamber and cooling down, the bread was removed from its double-foil packing, left to acclimatize for a short time and then sliced.

In turn, the microwave oven method of bread refreshing consisted in placing the three-layer foil-wrapped bread in a microwave oven chamber and keeping it there at the temperature of 100°C for 3 minutes. After removing from microwave-oven chamber and cooling down the bread was removed from its double-foil packing, left to acclimatize for a short time and then sliced.

It was found that as a result of employing all three methods of bread refreshing, after storing it for both 9 and 18 months, the bread manufactured by method of this invention met all requirements in both sensory and physicochemical respects. The bread had moisture content of 46-53 % and acidity of pH=6-8, and kept the adequate flavour and taste.

## Claims

1. A dough for wholemeal rye bread of extended shelf life containing natural rye sour, rye flour, yeast, malt extract, kitchen salt, fat and water, **wherein** its formula contains:
| | |
|---|---|
| sourdough with the degree of its total acidity of 20.0-35.0 conventional units | |
| | in a quantity of 0.194-0.262 parts by weight |
| rye flour, grade 720 | in a quantity of 0.361-0.277 parts by weight |
| wheat flour, grade 750 | in a quantity of 0.090-0.092 parts by weight |
| yeast | in a quantity of 0.012-0.010 parts by weight |
| malt extract | in a quantity of U.022-0.027 parts by weight |
| potato flakes | in a quantity of 0.015-0.018 parts by weight |
| fat | in a quantity of 0.015-0.018 parts by weight |
| kitchen salt | in a quantity of 0.012-0.010 parts by weight |
| improving agent | in a quantity of 0.008-0.009 parts by weight |
| water | in a quantity of 0.271-0.277 parts by weight. |

2. Dough as claimed in Claim 1, **wherein** said sourdough contains:
- a mixture consisting of: rye flour, grade 2000, in a quantity of 0.014-0.016 parts by wt
water in a quantity of 0.030-0.033 parts by weight,
kitchen salt in a quantity of 0.008-0.006 parts by weight and
lactic bacteria in a quantity of 0.00002-0.00004 parts by weight,
- rye flour, grade 2000, in a quantity of 0.240-0.250 parts by weight,
- rye flour, grade 720, in a quantity of 0.240-0.250 parts by weight and
- water in a quantity of 0.476-0.451 parts by weight.

3. Dough as claimed in Claim 1, **wherein** said sourdough contains:
- a mixture consisting of: rye flour, grade 2000, in a quantity of 0.014-0.016 parts by wt
water in a quantity of 0.030-0.033 parts by weight,
kitchen salt in a quantity of 0.008-0.006 parts by weight,
lactic bacteria in a quantity of 0.00002-0.00004 parts by weight,
- rye flour, grade 2000, in a quantity of 0,128-0.122 parts by weight,
- rye flour, grade 720, in a quantity of 0.128-0.122 parts by weight,
- crumbled wholemeal rye bread in a quantity of 0.250-0.244 parts by weight,
- water in a quantity of 0.450-0.464 parts by weight.

4. The method of making rye bread of extended shelf life consisting in dough making with the use of sourdough, rye flour, malt extract, yeast, kitchen salt, fat and water, its maturing, formation and baking the bread at the temperature above 220°C **wherein**: 0.194-0.262 parts by weight of sourdough with the degree of its total acidity 20-35 conventional units and 0.054-0.055 parts by weight of the water to be used for the dough is poured into a kneading trough and mixed while adding 0.012-0.010 parts by weight of yeast and 0.010-0.012 parts by weight of kitchen salt in form of their water solution, 0.015-0.018 parts by weight of potato flakes previously soaked in 0.135-0.107 parts by weight of water at 40°C, 0.022-0.027 parts by weight of malt extract diluted in 0.045-0.043 parts by weight of water at 40°C, and finally 0.015-0.018 parts by weight of fat, preferably lard, at the end of ingredient mixing. Then 0.361-0.277 parts by weight of rye flour, grade 720, is added to the resulting mixture, depending on total acidity said sourdough used, as well as 0.090-0.092 parts by weight of wheat flour, grade 750, and 0.035-0.037 parts by weight of water. Then all is subjected to slow-speed blending for 8-10 minutes and the resulting dough is left at rest for 4-6 minutes and at the temperature of 24-26 °C the mature dough is divided to portions into metal moulds (tins) and the moulds, filled with the dough, are put for 65 minutes into warm oven at the temperature of 44 - 46 °C and humidity of 78-82 % for the dough to rise and then the bread is baked in a, preferably ceramic, baking furnace at 210 - 270 °C for 25 - 45 minutes. Once baked, said moulds with bread are removed from furnace and the bread is put onto a spongy mat, then it is moved to sterile room or compartment where the bread is wrapped into polypropylene foil and sealed on the foil sides. Then the bread is put into hermetic furnace at 104-106°C and pasteurized thermally with temperature within the bread going down to 92°C. Once thermally stabilized, the bread is packed into another double layer foil, preferably polyamide-polyethylene grade, and sides are sealed with a subsequent check for packing tightness.

5. The method of making rye bread as claimed in Claim 4, **wherein** said packing tightness test is performed on the apparatus equipped with a tight water chamber in which the bread is placed and vacuum is created to enable detection of even small air bubbles.

6. The method of refreshing rye bread of extended shelf life obtainable by the method of claim 4, wherein said bread, packed tightly in double, preferably polypropylene and polyamide-polyethylene foil, is placed in the chamber of the apparatus at 90-100°C and left in it until warmed all through, then the bread is cooled in free air, removed from packing foil and left to acclimatize for 20 minutes, then it is subject to slicing, whereas the process of bread warming is conducted:
- in an open kettle with water at temperature of 90°C for 30 minutes, or
- in perforated container in chamber of convection-steam oven preheated to a temperature of 100°C and humidity of 100% for 30 minutes, or
- in microwave oven at temperature of 100°C for 3 minutes.

## Patentansprüche

1. Der Teig für Roggenvollkombrot mit der verlängerten Haltbarkeit, der natürliche Roggensäure, Roggenmehl, Hefe, Malzextrakt, Küchensalz, Fett und Wasser enthält, ist **dadurch gekennzeichnet, dass** sein Rezept enthält:
| | |
|---|---|
| Sauerteig mit dem Gesamtsäuregehalt von 20,0-30,0 konventionellen Einheiten | |
| | in der Menge von 0,194-0,262 |
| | Gewichtsteilen, |
| Roggenmehl Typ 720 | in der Menge von 0,361-0,277 |
| Gewichtsteilen, | |
| Weizenmehl Typ 750 | in der Menge von 0,090-92 Gewichtsteilen, |
| Hefe | in der Menge von 0,012-0,010 |
| Gewichtsteilen, | |
| Malzextrakt | in der Menge von 0,022-0,027 |
| Gewichtsteilen, | |
| Kartoffelflocken | in der Menge von 0,015-0,018 |
| Gewichtsteilen, | |
| Fett | in der Menge von 0,015-0,018 |
| Gewichtsteilen, | |
| Küchensalz | in der Menge von 0,012-0,010 |
| Gewichtsteilen, | |
| Backmittel | in der Menge von 0,008-0,009 |
| Gewichtsteilen, | |
| Wasser | in der Menge von 0,271-277 |
| Gewichtsteilen, | |

2. Der Teig gemäß Anspruch 1 ist **dadurch gekennzeichnet, dass** der genannte Sauerteig enthält:
- eine Mischung bestehend aus: Roggenmehl Typ 2000 in der Menge von 0,014-0,016 Gewichtsteilen,
Wasser in der Menge von 0,030-0,033 Gewichtsteilen,
Küchensalz in der Menge von 0,008-0,006 Gewichtsteilen und
Milchsäurebakterien in der Menge von 0,00002-0,00004 Gewichtsteilen,
- Roggenmehl Typ 2000 in der Menge von 0,240-0,250 Gewichtsteilen,
- Roggenmehl Typ 720 in der Menge von 0,240-0,250 Gewichtsteilen und
- Wasser in der Menge von 0,476-0,451 Gewichtsteilen.

3. Der Teig gemäß Anspruch 1 ist **dadurch gekennzeichnet, dass** der genannte Sauerteig enthält:
- eine Mischung bestehend aus: Roggenmehl Typ 2000 in der Menge von 0,014-0,016 Gewichtsteilen,
Wasser in der Menge von 0,030-0,033 Gewichtsteilen,
Küchensalz in der Menge von 0,008-0,006 Gewichtsteilen und
Milchsäurebakterien in der Menge von 0,00002-0,00004 Gewichtsteilen,
- Roggenmehl Typ 2000 in der Menge von 0,128-0,122 Gewichtsteilen,
- Roggenmehl Typ 720 in der Menge von 0,128-0,122 Gewichtsteilen,
- zerbröckeltes Roggenvollkombrot in der Menge von 0,250-0,244 Gewichtsteilen,
- Wasser in der Menge von 0,450-0,464 Gewichtsteilen.

4. Das Verfahren zur Herstellung von Roggenbrot mit der verlängerten Haltbarkeit, bestehend in der Vorbereitung des Teiges unter Einsatz von Säureteig, Roggenmehl, Malzextrakt, Hefen, Küchensalz, Fett und Wasser, in seiner Reifung, Formung und Brotbacken bei der Temperatur über 220°C, **dadurch gekennzeichnet, dass**: 0,194-0,262 Gewichtsteile von Säureteig mit dem Gesamtsäuregehalt von 20-35 konventionellen Einheiten und 0,054-0,055 Gewichtsteile von Wasser, die zum Teig verwendet werden, in den Backtrog eingegossen werden und unter Zugabe von 0,012-0,010 Gewichtsteilen von Hefen und 0,010-0,012 Gewichtsteilen von Küchensalz in Form seiner Wasserlösung, 0,015-0,018 Gewichtsteilen von Kartoffelflocken, vorher in 0,135-0,107 Gewichtsteilen von Wasser mit der Temperatur von 40°C aufgeweicht, 0,022-0,027 Gewichtsteilen von Malzextrakt, in 0,045-0,043 Gewichtsteilen von Wasser mit der Temperatur von 40°C verdünnt und schließlich 0,015-0,018 Gewichtsteilen von Fett, vorzugsweise Schmalz, am Ende der Vermischung von Zutaten, gemischt. Dann werden 0,361-0,277 Gewichtsteile von Roggenmehl Typ 720, abhängig von dem Gesamtsäuregehalt des genannten verwendeten Säureteiges, sowie 0,090-0,092 Gewichtsteile von Weizenmehl Typ 750 und 0,035-0.037 Gewichtsteile von Wasser der entstandenen Mischung beigemischt. Dann wird alles langsam 8-10 Minuten lang gemischt, der entstandene Teig wird 4-6 Minuten lang und bei der Temperatur von 24-26°C in Ruhe gelassen der gereifte Teig wird in Portionen in Metallformen (Förmchen) aufgeteilt, und die Formen werden, mit dem Teig gefüllt, für 65 Minuten in einen warmen Ofen bei der Temperatur von 44-46°C und der Feuchtigkeit von 78-82% geschoben, damit der Teig aufgeht und dann im vorzugsweise keramischen Backofen bei der Temperatur von 210-270°C 25-45 Minuten lang gebacken. Nach dem Backen werden die genannten Formen mit Brot aus dem Ofen genommen und das Brot wird auf eine schwammartige Matte gelegt, dann in einen sterilen Raum oder Abteilung gestellt, wo das Brot in eine Polypropylenfolie eingewickelt und an Folienkanten abgedichtet wird. Dann wird das Brot in einen hermetischen Ofen mit der Temperatur von 104-106°C geschoben und bei der auf 92°C herabgesetzten Temperatur im Innern von Brot thermisch pasteurisiert. Nach der thermischen Stabilisierung wird das Brot in nächste zweilagige, vorzugsweise Polyamid-Polyäthylen-Folie eingewickelt und die Kanten werden abgedichtet, anschließend erfolgt die Prüfung der Verpackungsdichtigkeit.

5. Das Verfahren zur Herstellung von Roggenbrot gemäß Anspruch 4 ist **dadurch gekennzeichnet, dass** der genannte Dichtigkeitstest der Verpackung auf einer Anlage ausgeführt wird, die mit der dichten Wasserkammer ausgestattet ist, in welche das Brot gelegt und der Unterdruck erzeugt wird, damit sogar geringe Luftblasen entdeckt werden können.

6. Das Verfahren zur Auffrischung von Roggenbrot mit der verlängerten Haltbarkeit, das nach Anspruch 4 erhältlich ist, ist **dadurch gekennzeichnet, dass** das genannte Brot, das in die zweilagige, vorzugweise aus Polypropylen und aus Polyamid-Polyäthylen bestehende Folie dicht eingewickelt wird, in eine Kammer der Anlage bei der Temperatur von 90-100°C gelegt und bis zur Erwärmung im ganzen Volumen gelassen wird, dann wird dieses Brot in der Freiluft abgekühlt, aus der Verpackungsfolie gelöst und ca. 20 Minuten lang akklimatisieren gelassen, dann geschnitten, wobei der Prozess der Warmhaltung von Brot
- im offenen Kessel mit Wasser mit der Temperatur von 90°C 30 Minuten lang oder
- im gelochten Behälter in einer Kammer des Konvektions- und Dampfofens, vorgewärmt auf die Temperatur von 100°C und Feuchtigkeit von 100% 30 Minuten lang oder
- in der Mikrowelle bei der Temperatur von 100°C 3 Minuten lang durchgeführt wird.

## Revendications

1. De la pâte à pain de seigle noir à durée de conservation prolongée contenant de l'acide du seigle naturel, farine de seigle, levure, extrait de malt, sel de cuisine, graisse et de l'eau, **significative par le fait** que sa composition contient
| | |
|---|---|
| du levain de dégré d'acidité totale 20,0-30,0 unités conventionnelles | |
| | en quantité de 0,194-0,262 de fractions de poids, |
| farine de seigle type 720 | en quantité de 0,361-0,277 de fractions de poids, |
| farine de blé type 750 | en quantité de 0,090-0.092 de fractions de poids, |
| levure | en quantité de 0,012-0,010 de fractions de poids, |
| extrait de malt | en quantité de 0,022-0,027 de fractions de poids, |
| flocons de pommes de terre | en quantité de 0,015-0,018 de fractions de poids, |
| graisse | en quantité de 0,015-0,018 de fractions de poids, |
| sel de cuisine | en quantité de 0,012-0,010 de fractions de poids, |
| améliorant | en quantité de 0,008-0,009 de fractions de poids, |
| eau | en quantité de 0,271-0.277 de fractions de poids. |

2. De la pâte selon la Revendication 1 **significative par le fait** que le levain mentionné contient :
- mélange composée de : farine de seigle type 2000 de 0,014-0,016 de fractions de poids,
eau de 0,030-0,033 de fractions de poids,
sel de cuisine de 0,008-0,006 de fractions de poids et
bactéries de l'acide lactique de 0,00002-0,00004 de fractions de poids,
- farine de seigle type 2000 de 0,240-0,250 de fractions de poids,
- farine de seigle type 720 de 0,240-0,250 de fractions de poids oraz
- eau de 0,476-0,451 de fractions de poids.

3. De la pâte selon la Revendication 1 **significative par le fait** que le levain mentionné contient:
- mélange composée de: farine de seigle type 2000 de 0,014-0,016 de fractions de poids,
eau de 0,030-0,033 de fractions de poids,
sel de cuisine de 0,008-0,006 de fractions de poids et
bactéries de l'acide lactique de 0,00002-0,00004 de fractions de poids,
- farine de seigle type 2000 de 0,128-0,122 de fractions de poids,
- farine de seigle type 720 de 0,128-0,122 de fractions de poids,
- pain de seigle mietté de 0,250-0,244 de fractions de poids,
- eau de 0,450-0,464 de fractions de poids.

4. La méthode de fabrication du pain de seigle à durée de conservation prolongée consiste en préparation de la pâte avec du levain, farine de seigle, extrait de malt, levure, sel de cuisine, graisse et de l'eau, sa maturation, formage et cuisson du pain à température au-dessus de 220°C **significative par le fait** que: 0,194-0,262 de fractions de poids de levain de dégré d'acidité totale 20-35 unités conventionnelles et 0,054-0,055 de fractions de poids d'eau, lesquels doivent être employés, sont versés dans une cuve en ajoutant 0,012-0,010 de fractions de poids de levure et 0,010-0,012 de fractions de poids de sel de cuisine en forme de sa solution aqueuse, 0,015-0,018 de fractions de poids de flocons de pommes de terre préalablement trempés dans 0,135-0,107 de fractions de poids d'eau de tempéparture 40°C, 0,022-0,027 de fractions de poids d'extrait de malt dissous dans 0,045-0,043 de fractions de poids d'eau de tempéparture 40°C et enfin 0,015-0,018 de fraction de poids de graisse, du saindoux de préférence, vers la fin de mélange des composants. Ensuite, on ajoute 0,361-0,277 de fractions de poids de farine de seigle type 720, dépendamment de l'acidité totale du levain utilisé, et de même, 0,090-0,092 de fractions de poids de farine de blé type 750 et 0,035-0.037 fractions de poids d'eau. Ensuite, le tout est légèrement mélangé pendant 8-10 minutes et la pâte doit se reposer pendant 4-6 minutes à température 24-26°C. La pâte faite est mises en portions dans des (petites) moules en métal et ces moules remplises de pâtes sont placées pour 65 minutes au four chaux à température 44-46°C et à humidité 78-82%, pour que la pâte travaille, ensuite on fait cuire la pâte au four de boulanger, céramique de préférence, pendant 25-45 minutes. Une fois le pain est fait, les moules sont sorties du four et placées sur un tapis spongieux, ensuite transmises dans une chambre stérile où le pain est emballé avec une feuille polypropylène bien étanche à ses bords. Ensuite, le pain est placé au four hermétique à température 104-106°C et il y est pasteurisé thermiquement avec la température à l'intérieur du pain diminuée à 92°C. Après stabilisation thermique, le pain est emballé en feuille de double couche, polyamide-polyéthylène de préférence, bien étanche à ses bords, et il est soumis au contrôle d'herméticité de l'emballage.

5. La méthode de fabrication du pain de seigle selon la Revendication 4 **significative par le fait** que ce test d'herméticité de l'emballage est réalisé avec une installation équipée d'une chambre à eau bien étanche où le pain est placé, pour assurer une détection de présence même de petites bulles d'air.

6. La méthode de rafraichir le pain de seigle à durée de conservation prolongée réalisée selon la revendication 4 sinificative par le fait que ce pain étant emballé hermétiquement en feuille de double couche, de préférence polypropylène- polyamide-polyéthylène, est placé dans une chambre du dispositif à température 90-100°C et laissé pour qu'il soit échauffé à tout son volume, ensuite il est refroidi à l'air libre, sorti de l'emballage et laissé s'acclimatiser pendant environ 20 minutes, ensuite le pain est coupé et tout le procès de maintenir le pain au chaud est réalisé :
- dans une chaudière ouverte à l'eau de 90°C pendant 30 minutes, ou
- dans un conteneur perforé d'un four à convection vapeur, chauffé préalablement à la température de 100°C et à l'humidité 100% pendant 30 minutes, ou bien
- dans un four à micro-ondes, à la température de 100°C pendant 3 minutes.
